# EUROPÄISCHE PATENTSCHRIFT

(11) **EP 3 514 070 B1**
(45) Veröffentlichungstag und Bekanntmachung des Hinweises auf die Patenterteilung: **26.07.2023**
(21) Anmeldenummer: 19153442.9
(22) Anmeldetag: 24.01.2019
(51) Int. Cl.: B64F 1/00, G06Q 10/08, B64C 39/02

(54) **ANORDNUNG UND VERFAHREN MIT EINER FLUGFÄHIGEN UNBEMANNTEN TRANSPORTEINRICHTUNG**
SYSTEM AND METHOD WITH AN UNMANNED TRANSPORT DEVICE CAPABLE OF FLIGHT
AGENCEMENT ET PROCÉDÉ COMPORTANT UN DISPOSITIF DE TRANSPORT VOLANT SANS PILOTE

(30) Priorität: 22.01.2018 DE 102018101315
(43) Veröffentlichungstag der Anmeldung: 24.07.2019
(73) Patentinhaber: Deutsche Post AG, 53113 Bonn (DE)
(72) Erfinder: Vorwerk, Felix, 53173 Bonn (DE); Pruski, Matthäus, 53844 Troisdorf (DE); Muller, Paul, L-6132 Junglinster (LU)
(74) Vertreter: Michalski Hüttermann & Partner Patentanwälte mbB

(56) Entgegenhaltungen:
- WO-A1-2016/130112
- WO-A1-2017/221235
- KR-A- 20130 122 715

## Beschreibung

### Technisches Gebiet

Die Erfindung betrifft eine Anordnung mit einer flugfähigen unbemannten Transporteinrichtung und einem an einer Bodenstation vorgesehenem beweglichen Fangarm zum Halten der Transporteinrichtung an der Bodenstation. Zudem betrifft die Erfindung ein Verfahren zum Halten der flugfähigen unbemannten Transporteinrichtung an der Bodenstation mit dem an der Bodenstation vorgesehenem beweglichen Fangarm.

### Hintergrund der Erfindung

Infolge steigenden Güterverkehrs durch Stück- und Sammelgutfahrten, LKW- oder Containertransporte, See- oder Luftfrachtpakettransporte im Rahmen von E-Commerce und Online-Versandhandelsangeboten hat sich die Anzahl an Transportgütern und insbesondere von Paketsendungen, Sendungen oder sonstigen transportablen Gütern, nachfolgend allgemein als Objekte bezeichnet, signifikant erhöht. Zwar ist es heutzutage möglich, eine Bestellung unabhängig von herkömmlichen Ladenöffnungszeiten Online zu tätigen, jedoch erfolgt die Lieferung des Objektes an den Empfänger fast ausschließlich mittels klassischer Zustellverfahren, beispielsweise durch Briefträger oder im Falle von Paketsendungen durch motorisierte Zustellfahrzeuge und im Wesentlichen nur innerhalb der Ladenöffnungszeiten. Ist der Empfänger bei der Lieferung des Objektes nicht anzutreffen, beispielsweise weil er als Berufstätiger innerhalb der Zustellzeiten seiner Arbeit nachgeht, wird entweder versucht, das Objekt ein weiteres Mal zuzustellen oder das Objekt wird in einer Filiale des Zustellunternehmens zur Abholung durch den Empfänger hinterlegt.

In jüngster Zeit sind daher Versuche unternommen worden, Objekte mittels unbemannter flugfähiger Transporteinrichtungen, beispielsweise mit einem flugfähigen unbemannten Luftfahrzeug, auch Paketkopter, Cargodrohne oder kurz Drohne genannt, an den Empfänger, eine Bodenstation oder an eine Fachanlagenvorrichtung als Sammelpunkt zu liefern, beispielsweise an eine DHL-Packstation, welche im öffentlichen Raum für einen Stadtbezirk für eine Mehrzahl Empfänger oder im Vorgarten eines Hauses des Empfängers aufgestellt ist. Das Objekt kann außerhalb der Ladenöffnungs- oder Zustellzeiten aus der Fachanlagenvorrichtung entnommen oder in diese eingestellt werden. Bei den vorgenannten Versuchen hat sich die eigentliche Übergabe des Objektes von der Transporteinrichtung an die Bodenstation oder Fachanlagenvorrichtung als besonders schwierig erwiesen. Beispielsweise ist ein "Abwerfen" des Objektes von der Transporteinrichtung an die Bodenstation oder Fachanlagenvorrichtung in der Regel nicht möglich, da es zu Beschädigungen zerbrechlicher Objekte kommen kann.

WO 2017/221235 A1 beschreibt ein Zentriersystem zum Positionieren eines unbemannten autonomen Fahrzeugs (UAV), welches mit zwei oder mehr damit starr verbundenen tragenden Extremitäten versehen ist, umfassend ein Paar verschiebbarer Positionierungselemente.

WO 2016/130112 A1 beschreibt Verfahren und Vorrichtungen zum dauerhaften Einsatz von Luftfahrzeugen, insbesondere ein Missionskontrollsystem, das so konfiguriert ist, dass es ein oder mehrere Luftfahrzeuge für den Einsatz zu und von einer oder mehreren Andockstationen steuert und verwaltet.

Um hohen Sicherheitsstandards zu genügen, mögliche Beschädigungen und Unfälle zu vermeiden, sollen Cargodrohnen in Zukunft nur auf dafür vorgesehenen "drone ports" als Bodenstationen landen, so dass das Übergeben des Objektes nur auf diesen drone ports erfolgen kann. Allerdings stellt sich bei solchen drone ports das Problem der Kompatibilität: Ein drone port, ähnlich einem Flughafen oder Heliport, soll mit einer möglichst großen Anzahl unterschiedlicher Drohnentypen kompatibel sein und diese während des Be- und Entladens sicher an dem drone port fixieren.

### Beschreibung der Erfindung

Ausgehend von dieser Situation ist es eine Aufgabe der vorliegenden Erfindung, eine Anordnung und ein entsprechendes Verfahren anzugeben, um ein Objekt in besonderes einfacher und sicherer Weise zwischen einer unbemannten flugfähigen Transporteinrichtung und einer Bodenstation zu übergeben.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch eine Anordnung mit einer flugfähigen unbemannten Transporteinrichtung und einem an einer Bodenstation vorgesehenem beweglichen Fangarm zum Halten der Transporteinrichtung an der Bodenstation gelöst, wobei an der Transporteinrichtung wenigstens eine Einbuchtung vorgesehen ist, und der Fangarm an seinem der Bodenstation abgewandten Ende wenigstens ein Expansionselement aufweist, welches in die wenigstens eine Einbuchtung einführbar und im eingeführten Zustand zum Herstellen eines Formschlusses und/oder eines Kraftschlusses zwischen der wenigstens einen Einbuchtung und dem wenigstens einen Expansionselement expandierbar ist.

Ein wesentlicher Punkt der Erfindung liegt darin, dass die Transporteinrichtung mittels des Fangarms in einfacher Weise "einfangbar" und mittels des Expansionselements an der Bodenstation fixierbar ist, um in sicherer Weise Objekte zwischen der Transporteinrichtung und der Bodenstation übergeben zu können. Zudem erlaubt der Fangarm das Halten von Transporteinrichtungen unterschiedlichster Arten, wie nachfolgend näher erläutert ist. Schließlich benötigt die Transporteinrichtung gegenüber aus dem Stand der Technik bekannten Ausgestaltungen keinerlei Landegestell, Kufen oder dergleichen, um selbständig an der Bodenstation landen zu können. Denn durch den vorgeschlagenen Fangarm sowie das Expansionselement kann auf ein ansonsten im Stand der Technik notwendiges Landen der Transporteinrichtung an der Bodenstation verzichtet werden. Stattdessen erlaubt der Fangarm das einfache und schnelle "Einfangen" der Transporteinrichtung sogar während des Fluges in einem Umgebungsbereich der Bodenstation, welcher durch eine maximale Erstreckung des Fangarms definiert ist.

Da die Transporteinrichtung wie zuvor beschrieben kein Landegestell, Kufen oder dergleichen zum Landen an der Bodenstation benötigt, lassen sich gegenüber aus dem Stand der Technik bekannten Transporteinrichtungen für die vorgeschlagene Anordnung und das nachstehend beschriebene Verfahren Transporteinrichtungen mit geringerem Eigengewicht und entsprechend höherer Tragfähigkeit und/oder Reichweite verwenden. In einer denkbaren Verwendung bewegt sich der Fangarm synchron mit der sich der Bodenstation nähernden Transporteinrichtung und/oder nähert sich der Transporteinrichtung durch Extrahieren des Fangarms an. Durch weiteres Extrahieren des Fangarms wird das Expansionselement in die Einbuchtung eingeführt und im eingeführten Zustand expandiert, um Formschluss und/oder Kraftschluss zwischen der Einbuchtung und dem Expansionselement herzustellen. Daraufhin kontrahiert der Fangarm, um die Transporteinrichtung an der Bodenstation abzusetzen, so dass in der Folge Objekte zwischen der Bodenstation und der Transporteinrichtung übergeben werden können.

Die Transporteinrichtung ist bevorzugt als Fluggerät, als unbemanntes Luftfahrzeug, Englisch als "unmanned, uninhabited oder unpiloted aerial vehicle", abgekürzt UAV, als Paketkopter, Cargodrohne oder als Drohne ausgestaltet. Mögliche Ausprägungsformen der Transporteinrichtung können Helikopter, Multikopter, Quadrokopter oder Tiltwing sein, um nur einige Möglichkeiten aufzuzählen. Bevorzugt weisen die Transporteinrichtung und/oder die Bodenstation mechanische und/oder informationstechnologische Einrichtungen auf, die die Transporteinrichtung und/oder die Bodenstation zum Ausführen eines nachfolgend beschriebenen Verfahrens befähigen, insbesondere zum automatischen und/oder autonomen Ausführen des Verfahrens. Die Transporteinrichtung und/oder die Bodenstation kann einen Mikroprozessor, eine Steuerungseinrichtung und/oder eine speicherprogrammierbare Steuerung aufweisen, die mit einem Softwareprogramm zum Ausführen der Verfahrensschritte und/oder über Kommunikationseinrichtungen zur drahtgebundenen und/oder drahtlosen Kommunikation zwischen der Transporteinrichtung und der Bodenstation verfügen. Die Transporteinrichtung ist bevorzugt ausgeführt, sich in vertikaler Richtung der Bodenstation nähern und/oder sich von dieser entfernen zu können.

Der Fangarm lässt sich also nicht nur zum Halten der Transporteinrichtung sondern beispielsweise auch zum Heranziehen und Absetzen der Transporteinrichtung an und/oder auf der Bodenstation sowie Hochheben, Starten und/oder Beschleunigen der Transporteinrichtung weg von der Bodenstation verwenden. Das Einführen des Expansionselementes in die Einbuchtung erfolgt bevorzugt mittels einer Vertikalbewegung. Der eingeführte Zustand liegt insbesondere dann vor, wenn das Expansionselement vollständig in die Einbuchtung eingeführt ist und/oder wenn das der Bodenstation abgewandte Ende des Fangarms berührend an der Einbuchtung und/oder der Transporteinrichtung anliegt. Ein der Bodenstation zugewandtes Ende des Fangarms ist bevorzugt an der Bodenstation beweglich befestigt. Mittels des Fangarms lassen sich zudem Transporteinrichtungen verwenden, welche nur über eine begrenzte Genauigkeit beim Anfliegen an die Bodenstation von beispielsweise 3 Metern verfügt: Sobald die Transporteinrichtung in den Umgebungsbereich dieser beispielsweise 3 Metern gelangt ist, lässt sich die Transporteinrichtung durch den Fangarm "einfangen" und an der Bodenstation absetzen. Im eingeführten Zustand lässt sich durch Expandieren des wenigstens einen Expansionselements die Transporteinrichtung gegenüber der Bodenstation beispielsweise in horizontaler Richtung fixieren.

Nach einer bevorzugten Weiterbildung weist der Fangarm an seinem der Bodenstation abgewandten Ende eine Mehrzahl Expansionselemente auf, welche in ihrem Abstand zueinander variabel an dem Ende anordenbar sind. Der Abstand zwischen zwei Expansionselementen beträgt beispielsweise 60, 70 oder 80 cm. Bevorzugt sind zwei, drei, vier, fünf oder mehr Expansionselemente vorgesehen, welche insbesondere in gleichen Abständen zueinander, in einer Reihe und/oder in mehreren parallelen Reihen an dem Ende angeordnet sind. Weiter bevorzugt ist an dem Ende eine Schiene vorgesehen, auf der die Mehrzahl Expansionselemente verschiebbar angeordnet sind. Besonders bevorzugt ist an dem Ende ein Antrieb vorgesehen, mittels dessen der Abstand der Expansionselemente zueinander veränderbar ist. Ganz besonders bevorzugt ist der Fangarm ausgestaltet, dass insbesondere mittels des Antriebs der Abstand der Expansionselemente automatisch an eine sich der Bodenstation nähernde Transporteinrichtung angepasst wird. Durch Variieren des Abstands lassen sich die Expansionselemente bzw. der Fangarm mit unterschiedlichen Arten von Transporteinrichtungen verbinden.

Die Aufgabe der Erfindung wird weiterhin durch ein Verfahren zum Halten einer flugfähigen unbemannten Transporteinrichtung an einer Bodenstation mit einem an der Bodenstation vorgesehenem beweglichen Fangarm gelöst, wobei an der Transporteinrichtung wenigstens eine Einbuchtung vorgesehen ist, und der Fangarm an seinem der Bodenstation abgewandten Ende wenigstens ein Expansionselement aufweist, mit den Schritten:
Einführen des wenigstens einen Expansionselements in die wenigstens eine Einbuchtung, und
Expandieren des wenigstens einen Expansionselements im eingeführten Zustand zum Herstellen eines Formschlusses und/oder eines Kraftschlusses zwischen der wenigstens einen Einbuchtung und dem wenigstens einen Expansionselement.

Mittels des vorgeschlagenen Verfahrens lassen sich Transporteinrichtungen unterschiedlichster Ausprägungen ohne Landegestell, Kufen oder dergleichen in sicherer und einfacher Weise mittels des Fangarms an der Bodenstation landen und von dieser starten, wodurch die Bodenstation "multidrohnenfähig" wird. Da die Transporteinrichtungen kein Landegestell, Kufen oder dergleichen benötigen, verbessern sich die aerodynamischen Eigenschaften der Transporteinrichtungen und erhöht sich die Tragfähigkeit und Reichweite der Transporteinrichtungen. Zudem können die Transporteinrichtungen mittels des Fangarms auch wieder von der Bodenstation starten, so dass ein ansonsten im Stand der Technik notwendiges teils manuelles Ausrichten der Transporteinrichtungen an der Bodenstation in einer Startposition entfällt. Schließlich lässt sich durch den Fangarm, nach Herstellen des Formschlusses und/oder eines Kraftschlusses, die Transporteinrichtung verlässlich an der Bodenstation fixieren, so dass ein Umkippen durch Windböen oder dergleichen der Transporteinrichtung vermieden und ein sicheres Beladen und Entladen der Transorteinrichtung möglich ist

Nach einer bevorzugten Weiterbildung des Verfahrens weist der Fangarm an seinem der Bodenstation abgewandten Ende eine Mehrzahl Expansionselemente auf und das Verfahren weist den folgenden Schritt auf: Anordnen der Mehrzahl Expansionselemente an dem Ende korrespondierend zu einer Mehrzahl Einbuchtungen. Bevorzugt erfolgt das Anordnen automatisiert im Hinblick zu den Abständen der Mehrzahl Einbuchtungen der Transporteinrichtung. Weiter bevorzugt ist an dem Fangarm eine Kamera oder Erfassungseinheit vorgesehen, welche den Abstand der Mehrzahl Einbuchtungen erkennen kann und entsprechend die Mehrzahl Expansionselemente an dem Ende korrespondierend zu der Mehrzahl Einbuchtungen anordnet.

Nach einer noch weiteren bevorzugten Weiterbildung weist das Verfahren den Schritt auf: Ausrichten des wenigstens einen Expansionselements während eines Fluges und/oder einer Landung der Transporteinrichtung zu der wenigstens einen Einbuchtung, und/oder nach Herstellen des Formschlusses und/oder des Kraftschlusses, Ausrichten der Transporteinrichtung relativ zu der Bodenstation durch den Fangarm. Nach dieser Weiterbildung erfolgt die Ausrichtung des wenigstens einen Expansionselements beispielsweise bereits während der Annäherung der Transporteinrichtung an die Bodenstation. Die sich der Bodenstation nähernde Transporteinrichtung kann dazu mit der Bodenstation in Kommunikationsverbindung stehen und entsprechende Informationen zum Ausrichten des wenigstens einen Expansionselements während des Fluges an die Bodenstation übermitteln. Ebenso lassen sich derartige Informationen beispielsweise von einem Logistikzentrum an die Bodenstation übermitteln. Durch Ausrichten der Transporteinrichtung relativ zu der Bodenstation kann die Transporteinrichtung in eine Be- und Entladeposition überführt werden und/oder zum Starten in eine Windrichtung gedreht werden. Zudem ist denkbar, dass die Transporteinrichtung mittels des Fangarms zum Austauschen einer Batterie der Transporteinrichtung an einer Batterieaustauscheinrichtung der Bodenstation positioniert wird.

Nach einer anderen bevorzugten Weiterbildung weist das Verfahren den Schritt auf: Erfassen einer Windgeschwindigkeit und/oder Windrichtung an der Bodenstation, und Ausrichten des wenigstens einen Expansionselements zu der wenigstens einen Einbuchtung in Abhängigkeit der erfassten Windgeschwindigkeit und/oder Windrichtung. Zum Erfassen der Windgeschwindigkeit und/oder der Windrichtung können an der Bodenstation ein oder eine Mehrzahl Anemometer vorgesehen sein, welche weiter bevorzugt an einem Perimeter der Bodenstation angeordnet sind. Durch die zuvor erwähnte Kamera oder Erfassungseinheit, welche ebenso an der Bodenstation vorgesehen sein kann, lässt sich eine Position der Transporteinrichtung relativ zu der Bodenstation erfassen, um abhängig von der erfassten Position den Fangarm relativ zu der Transporteinrichtung auszurichten, um das wenigstens eine Expansionselement zielgenauer in die wenigstens eine Einbuchtung einführen zu können. Durch Erfassen der Windgeschwindigkeit und/oder der Windrichtung lässt sich zudem die durch Wind beeinflusste Position der Transporteinrichtung relativ zu der Bodenstation berechnend vorhersehen und eine Ausrichtung des wenigstens einen Expansionselements an die beeinflusste Position anpassen.

Gemäß einer noch anderen Weiterbildung umfasst das Expandierens ein Aufblasen des wenigstens einen Expansionselements und/oder weist das Verfahren den Schritt auf: Kontrahieren des wenigstens einen Expansionselements zum Lösen des Formschlusses und/oder des Kraftschlusses. Nach einer bevorzugten Weiterbildung der Anordnung oder des Verfahren ist das wenigstens eine Expansionselement aufblasbar ausgestaltet und/oder ist die wenigstens eine Einbuchtung an einer Unterseite der Transporteinrichtung vorgesehen. Das Aufblasen kann durch Druckluft erfolgen, so dass Toleranzen zwischen dem wenigstens einen Expansionselement und der wenigstens einen Einbuchtung ausgeglichen und/oder Formschluss hergestellt werden kann. Durch Expandieren des in die Einbuchtung eingeführten Expansionselements lässt sich die Transporteinrichtung beschädigungsfrei an dem Fangarm fixieren. Die Fixierung kann durch Kontrahieren des Expansionselements, beispielsweise nach Entweichen der zuvor eingeblasenen Druckluft, aufgehoben werden.

Nach einer anderen bevorzugten Weiterbildung der Anordnung oder des Verfahrens sind an der Transporteinrichtung eine Mehrzahl voneinander beabstandete Einbuchtungen vorgesehen und der Fangarm weist an seinem der Bodenstation abgewandeten Ende eine Mehrzahl voneinander beabstandete Expansionselemente auf. Bevorzugt sind die Mehrzahl Expansionselemente korrespondierend zu der Mehrzahl Einbuchtungen angeordnet. Durch eine Mehrzahl Expansionselemente und Einbuchtungen lässt sich die Transporteinrichtung besonders lagesicher an der Bodenstation fixieren.

Grundsätzlich können die Einbuchtung und/oder das Expansionselement beliebig ausgestaltet sein, um nach dem Einführen und dem Expandieren den Formschluss und/oder den Kraftschluss auszubilden. Nach einer besonders bevorzugten Weiterbildung der Anordnung oder des Verfahrens ist die wenigstens eine Einbuchtung als Hülse und/oder das wenigstens eine Expansionselement als Dorn ausgeführt. Bevorzugt ist das Expansionselement bzw. der Dorn ausgeführt, im expandierten Zustand berührend und/oder formschlüssig an der Einbuchtung bzw. der Hülse anzuliegen. Die Einbuchtung kann ebenso als Aussparung oder Bohrung ausgeführt sein.

Nach einer weiteren bevorzugten Weiterbildung der Anordnung oder des Verfahrens weist die wenigstens eine Einbuchtung eine trichterartige Öffnung zum Einführen des wenigstens einen Expansionselementes auf. Im Bereich der trichterartigen Öffnung weist die wenigstens eine Einbuchtung bevorzugt einen größeren Durchmesser auf, der sich mit zunehmender Tiefe der Einbuchtung verjüngt. Durch die trichterartige Öffnung wird das Einführen des wenigstens einen Expansionselementes in die wenigstens eine Einbuchtung erleichtert.

Nach einer anderen bevorzugten Weiterbildung der Anordnung oder des Verfahrens erweitert sich die wenigstens eine Einbuchtung im Profil von einer der Transporteinrichtung abgewandten Öffnung hin zu der Transporteinrichtung schlüssellochartig und/oder hohlraumartig. Bevorzugt ist die schlüssellochartigen Erweiterung als Hohlraum ausgeführt. Durch Expandieren des Expansionselements in der schlüssellochartigen und/oder hohlraumartigen Erweiterung lässt sich der Kraftschluss zwischen der wenigstens einen Einbuchtung und dem wenigstens einen Expansionselement herstellen, so dass die Transporteinrichtung beispielsweise in vertikaler Richtung gegenüber der Bodenstation fixiert ist. Im Bereich der schlüssellochartigen und/oder hohlraumartigen Erweiterung weist die Einbuchtung einen größeren Durchmesser auf, der sich zur Öffnung hin verjüngt und gegebenenfalls zum Ausbilden der trichterartigen Öffnung wieder vergrößert.

In diesem Zusammenhang ist bevorzugt, wenn in der schlüssellochartigen und/oder hohlraumartigen Erweiterung wenigstens ein Luftauslass vorgesehen ist. Durch den beispielsweise als Entlüftungsloch ausgeführten Luftauslass kann beim Expandieren des Expansionselementes Luft aus der schlüssellochartigen und/oder hohlraumartigen Erweiterung ausströmen und/oder beim Kontrahieren einströmen. Bevorzugt sind eine Mehrzahl Luftauslässe vorgesehen, die beabstandet an der schlüssellochartigen und/oder hohlraumartigen Erweiterung angeordnet sind.

Nach einer anderen bevorzugten Weiterbildung der Anordnung oder des Verfahrens ist der Fangarm höhen-, horizontal veränderbar und/oder verdrehbar ausgeführt und/oder weist wenigstens ein drehbares Gelenk auf. Bevorzugt ist der Fangarm nach Art eines Kranarms ausgeführt, welches mittels eines ersten Gelenks an seinem der Bodenstation zugewandten Ende mit der Bodenstation verbunden ist. Über ein zweites Gelenk kann das wenigstens eine Expansionselement verschwenkbar an dem der Bodenstation abgewandten Ende des Fangarms mit diesem verbunden ist. Zwischen dem ersten und dem zweiten Gelenk können ein einziges oder eine Mehrzahl Gelenke vorgesehen sein, damit sich der Fangarm in einem Umgebungsbereich der Bodenstation bewegen kann. Bevorzugt ist der Fangarm ausfahrbar, ausklappbar und/oder ausstreckbar gestaltet und erstreckt sich in seinem vollständig ausgestreckten Zustand zwischen dem ersten und dem zweiten Gelenk beispielsweise über eine Distanz von 3, 4, 5, 7 oder mehr Metern.

Zur Ausgestaltung der Bodenstation existieren grundsätzlich verschiedene Möglichkeiten. Nach einer besonders bevorzugten Weiterbildung der Anordnung oder des Verfahrens ist die Bodenstation als Fachanlagenvorrichtung, als Aufnahmebehälter, als Fahrzeug, Gebäude und/oder Mast ausgeführt. Weiter bevorzugt ist die Bodenstation als Packstation ausgeführt und/oder in einem öffentlichen Umfeld, beispielsweise an einem Straßenrand, oder in einem privaten Umfeld, beispielsweise in einem Vorgarten oder auf einem Dach eines Gebäudes vorgesehen. Das Fahrzeug kann als Lieferwagen oder Lastkraftwagen ausgeführt sein, auf dessen Ladefläche der Fangarm angeordnet ist.

### Kurze Beschreibung der Zeichnungen

Nachfolgend wird die Erfindung unter Bezugnahme auf die anliegende Zeichnung anhand eines bevorzugten Ausführungsbeispiels näher erläutert.

In den Zeichnungen zeigen
- Fig. 1: eine schematische Ansicht einer Anordnung mit einer flugfähigen unbemannten Transporteinrichtung und einer Bodenstation gemäß einem bevorzugten Ausführungsbeispiel der Erfindung,
- Fig. 2: eine schematische Ansicht einer weiteren Anordnung mit der flugfähigen unbemannten Transporteinrichtung und einer weiteren Bodenstation gemäß einem weiteren bevorzugten Ausführungsbeispiel der Erfindung,
- Fig. 3: eine schematische Ansicht einer weiteren Anordnung mit der flugfähigen unbemannten Transporteinrichtung und einer weiteren Bodenstation gemäß einem weiteren bevorzugten Ausführungsbeispiel der Erfindung,
- Fig. 4: eine schematische Teilansicht der flugfähigen unbemannten Transporteinrichtung und eines an der Bodenstation vorgesehenem beweglichen Fangarm gemäß dem bevorzugten Ausführungsbeispiel der Erfindung, und
- Fig. 5: eine weitere schematische Teilansicht der flugfähigen unbemannten Transporteinrichtung und des an der Bodenstation vorgesehenem beweglichen Fangarm gemäß dem bevorzugten Ausführungsbeispiel der Erfindung.

### Detaillierte Beschreibung der Ausführungsbespiele

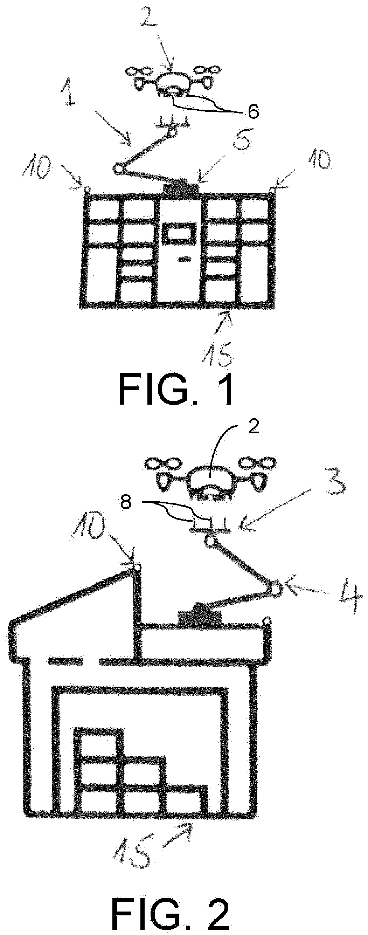

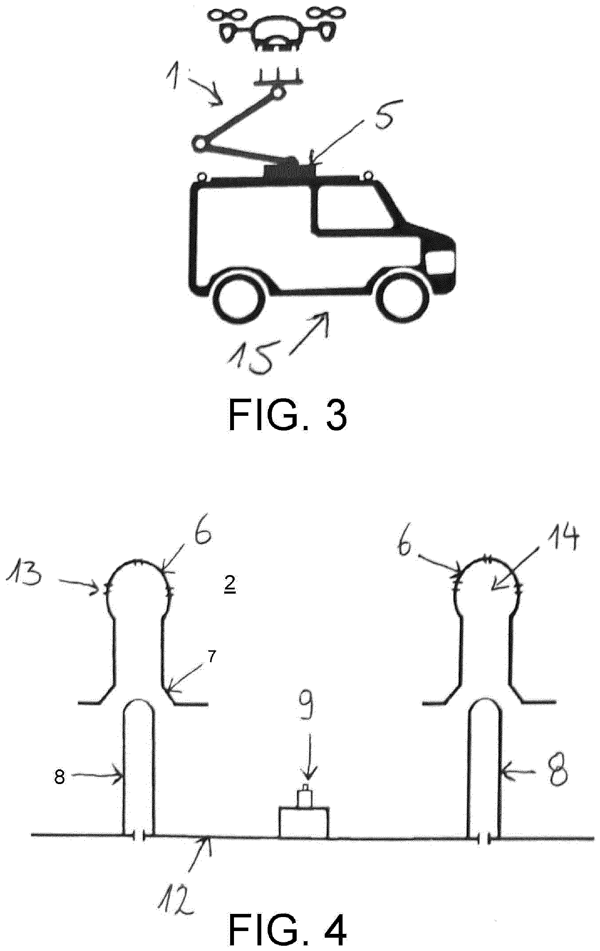

Fig. 1 bis 3 zeigen in jeweils schematischen Ansichten eine Anordnung mit einer als Drohne ausgeführten flugfähigen unbemannten Transporteinrichtung 2 und einer Bodenstation 15 gemäß bevorzugten Ausführungsbeispielen der Erfindung. Während die Bodenstation 15 in Fig. 1 als Fachanlage, auch Packstation genannt, ausgeführt ist, zeigt Fig. 2 ein Gebäude als Bodenstation 15 und Fig. 3 ein Fahrzeug als mobile Bodenstation. Die Bodenstation 15 kann ebenso als Aufnahmebehälter, Mast oder dergleichen ausgeführt sein.

An der Bodenstation 15 ist ein beweglicher Fangarm 1 vorgesehen, welcher entweder fest oder abnehmbar an der Bodenstation 15 befestigt ist. Ein der Bodenstation 15 zugewandtes Ende des Fangarms 1 ist mittels eines drehbaren Gelenks 4 über eine Landeeinrichtung 5 für die Transporteinrichtung 2 an der Bodenstation befestigt. Der aus einem Metall ausgeführte Fangarm 1 verfügt über zwei weitere Gelenke 4, so dass ein der Bodenstation 15 abgewandtes Ende 3 relativ zu der Bodenstation 15 höhen und horizontal veränderbar und sowie verdrehbar ist. Die Gelenke 4 sind beabstandet zueinander angeordnet, wobei an dem der Bodenstation 15 abgewandten Ende über eines der Gelenke 4 eine Aufnahmeeinrichtung zum Aufnehmen und Halten der Transporteinrichtung 2 vorgesehen ist.

Die Bodenstation 15 weist eine nicht gezeigte Steuerung auf, welche während eines Anfliegens der Transporteinrichtung 2 an die Bodenstation 15 die Aufnahmeeinrichtung des Fangarms 1 synchron zur Transporteinrichtung 2 bewegt, um wie nachfolgend näher beschrieben die Transporteinrichtung 2 form und kraftschlüssig mit der Aufnahmeeinrichtung 3 zu verbinden. Dazu nähert sich der Fangarm 1 mit der Aufnahmeeinrichtung 3 während des horizontalen und/oder vertikalen Anflugs einer Unterseite der Transporteinrichtung 2 an.

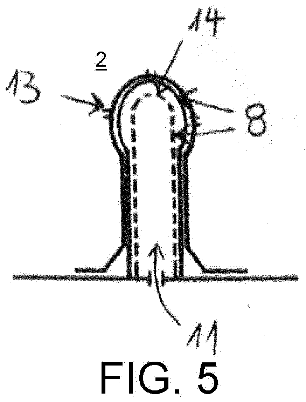

An der Unterseite der Transporteinrichtung 2 sind mehrere im Profil hülsen- oder schlüssellochartige und zueinander beabstandete Einbuchtungen 6 vorgesehen, wie in Fig. 1 bezeichnet und vergrößert in Figs. 4 und 5 gezeigt. Die Einbuchtungen 6 erstrecken sich von einer jeweiligen trichterartigen Öffnung 7 an der Unterseite der Transporteinrichtung 2 in diese hinein und erweitern sich schlüssellochartig zu einem im Profil kreisartigen Hohlraum 14. Der Durchmesser der im Schnitt kreisartigen Einbuchtungen 6 verringert sich zunächst von der Öffnung 7, um sich dann im Bereich des Hohlraumes 14 wieder zu vergrößern. Während an der Transporteinrichtung 2 drei Einbuchtungen 6 vorgesehen sind, zeigt Fig. 4 zwei Einbuchtungen 6 und Fig. 5 eine Einbuchtung 6 im Querschnitt.

Korrespondierend zu den Einbuchtungen 6 sind an dem Ende 3 mehrere ebenso zueinander beabstandete dornenartige Expansionselemente 8 vorgesehen, wie in Fig. 2 bezeichnet und vergrößert in Figs. 4 und 5 gezeigt. Die Expansionselemente 8 sind an dem Ende 3 auf einer Schiene 12 in ihrem Abstand zueinander variabel anordenbar angeordnet. Derart können die Expansionselemente 8 in Einbuchtungen 6 mit unterschiedlichen Abständen zueinander eingeführt werden. Der Abstand zwischen den Expansionselementen 8 und entsprechend der Einbuchtungen 6 beträgt vorliegend 10 cm, wobei ebenso andere Abstände von 15 cm oder 20 cm möglich sind.

Der Abstand zwischen den Expansionselementen 8 lässt sich manuell oder automatisch mittels eines nicht gezeigten Motors an die anfliegende Transporteinrichtung 2 anpassen. Die Expansionselemente 8 und die Einbuchtungen 6 können in einer Reihe hintereinander, dreieckartig oder viereckartig zueinander angeordnet sein. Zwischen den Expansionselementen 8 ist an der Schiene 12 eine nur schematisch gezeigte Einrichtung 9 zum Entladen und Beladen der Transporteinrichtung 2 vorgesehen.

Fig. 4 zeigt eine Grundform der im Schnitt kreisrunden Expansionselemente 8, in welcher diese entlang ihrer Erstreckung einen gleichbleibenden Durchmesser aufweisen. Die Expansionselemente 8 sind aus einem gummiartigen Material ausgeführt, welches aus der in Fig. 4 gezeigten Grundform in die in Fig. 5 gezeigte Expansionsform mittels Aufblasen durch Druckluft expandierbar ist (die gestrichelte Linie in Fig. 5 zeigt die Grundform). Im expandierten Zustand liegt das Expansionselement 8 berührend an der Einbuchtung 6 an.

Sofern die Expansionselemente 8 durch Bewegen des Fangarm 1 in die Einbuchtungen 6 eingeführt werden, wie in Fig. 4 gezeigt, lässt sich im eingeführten Zustand durch Expandieren der Expansionselemente 8 ein Kraft- und Formschluss zwischen den Expansionselementen 8 und den Einbuchtungen 6 erzeugen, wie in Fig. 5 gezeigt. Denn aufgrund des im Hohlraum 14 expandierten und an der Einbuchtung 6 berührend anliegenden Expansionselementes 8 ist die Transporteinrichtung nicht nur formschlüssig sondern auch kraftschlüssig mit dem Fangarm 1 und damit mit der Bodenstation 15 verbunden. Damit beim Expandieren der Expansionselementen 8 aus den Einbuchtungen 6 Luft entweichen kann, sind im Bereich der schlüssellochartigen Erweiterung eine Mehrzahl Luftauslässe 13 vorgesehen. Im Ergebnis lässt sich die Transporteinrichtung 2 mittels des Fangarm 1 von der Bodenstation 15 "einfangen" und durch Kontraktion des Fangarms 1 auf der Landeeinrichtung 5 der Bodenstation zum Entladen und Beladen mittels der Einrichtung 9 absetzen.

An dem Ende 3 des Fangarms 1 ist eine Sensorik in Form eines Lasers vorgesehen, die bei Annäherung der Transporteinrichtung 2 die Abstände der Einbuchtungen 6 an der Transporteinrichtung 2 erkennt und die Abstände der Expansionselemente 8 anpasst. Zudem führt die Steuerung das Ende 3 des Fangarms 1 mit den Expansionselementen 8 an die Transporteinrichtung 2 heran und schließlich in die Einbuchtungen 6 herein. Im eingeführten Zustand bewirkt die Steuerung das Expandieren der Expansionselemente 8 durch Aufblasen derselben mit Druckluft, angedeutet durch Pfeil 11, und kontrahiert den Fangarm 1 zum Absetzen der Transporteinrichtung 2 auf der Bodenstation 15.

Nach dem Entladen und Beladen der Transporteinrichtung 2 wird der Fangarm 1 mittels der Steuerung ausgestreckt, um die Transporteinrichtung 2 von der Bodenstation 15 anzuheben. Die Expansionselemente 8 werden kontrahiert, so dass sich die dornenartigen Expansionselemente 8 aus den Einbuchtungen 6 lösen und die Transporteinrichtung 2 von der Bodenstation 15 wegfliegen kann.

An der Bodenstation 15 sind ferner eine Mehrzahl Anemometer 10 vorgesehen, um im Bereich der Bodenstation 15 vorherrschender Wind und Windböen zu erfassen. Die Steuerung berücksichtigt eine von den Anemometern 10 erfasste Windgeschwindigkeit und Windrichtung beim Ausrichten des Fangarm 1 relativ zu der anfliegenden Transporteinrichtung 2 und korrigiert die Position des Fangarms 1 entsprechend.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Fangarm | 1 |
| Transporteinrichtung | 2 |
| Ende | 3 |
| Gelenk | 4 |
| Landeeinrichtung | 5 |
| Einbuchtung | 6 |
| Öffnung | 7 |
| Expansionselement | 8 |
| Einrichtung | 9 |
| Anemometer | 10 |
| Pfeil | 11 |
| Schiene | 12 |
| Luftauslass | 13 |
| Hohlraum | 14 |
| Bodenstation | 15 |

## Patentansprüche

1. Anordnung mit einer flugfähigen unbemannten Transporteinrichtung (2) und einem an einer Bodenstation (15) vorgesehenem beweglichen Fangarm (1) zum Halten der Transporteinrichtung (2) an der Bodenstation (15), wobei
an der Transporteinrichtung (2) wenigstens eine Einbuchtung (6) vorgesehen ist, und
der Fangarm (1) an seinem der Bodenstation (15) abgewandten Ende (3) wenigstens ein Expansionselement (8) aus einem gummiartigen Material aufweist, welches in die wenigstens eine Einbuchtung (6) einführbar und im eingeführten Zustand zum Herstellen eines Formschlusses und/oder eines Kraftschlusses zwischen der wenigstens einen Einbuchtung (6) und dem wenigstens einen Expansionselement (8) durch Druckluft aufblasbar ausgestaltet ist.

2. Anordnung nach dem der vorhergehenden Anspruch, wobei der Fangarm (1) an seinem der Bodenstation (5) abgewandeten Ende eine Mehrzahl Expansionselemente (8) aufweist, welche in ihrem Abstand zueinander variabel an dem Ende (3) anordenbar sind.

3. Verfahren zum Halten einer flugfähigen unbemannten Transporteinrichtung (2) an einer Bodenstation (15) mit einem an der Bodenstation (15) vorgesehenem beweglichen Fangarm (1), wobei
an der Transporteinrichtung (2) wenigstens eine Einbuchtung (6) vorgesehen ist, und
der Fangarm (1) an seinem der Bodenstation (15) abgewandeten Ende (3) wenigstens ein Expansionselement (8) aus einem gummiartigen Material aufweist, mit den Schritten:
Einführen des wenigstens eins Expansionselements (8) in die wenigstens eine Einbuchtung (6), und
Aufblasen des wenigstens einen Expansionselements (8) im eingeführten Zustand mittels Druckluft zum Herstellen eines Formschlusses und/oder eines Kraftschlusses zwischen der wenigstens einen Einbuchtung (6) und dem wenigstens einen Expansionselement (8).

4. Verfahren nach dem vorhergehenden Verfahrensanspruch, wobei der Fangarm (1) an seinem der Bodenstation (15) abgewandten Ende (3) eine Mehrzahl Expansionselemente (8) aufweist und mit Schritt:
Anordnen der Mehrzahl Expansionselemente (8) an dem Ende (3) korrespondierend zu einer Mehrzahl Einbuchtungen (6).

5. Verfahren nach einem der vorhergehenden Verfahrensansprüche, mit dem Schritt:
Ausrichten des wenigstens einen Expansionselements (8) während eines Fluges und/oder einer Landung der Transporteinrichtung (1) zu der wenigstens einen Einbuchtung (6), und/oder
Nach Herstellen des Formschlusses und/oder des Kraftschlusses, Ausrichten der Transporteinrichtung (1) relativ zu der Bodenstation (15) durch den Fangarm (1).

6. Verfahren nach einem der vorhergehenden Verfahrensansprüche, mit dem Schritt:
Erfassen einer Windgeschwindigkeit und/oder -richtung an der Bodenstation (15) und
Ausrichten des wenigstens einen Expansionselements (8) zu der wenigstens einen Einbuchtung (6) in Abhängigkeit der erfassten Windgeschwindigkeit und/oder -richtung.

7. Verfahren nach einem der vorhergehenden Verfahrensansprüche, wobei der Schritt des Expandierens ein Aufblasen des wenigstens einen Expansionselements (8) umfasst, und/oder mit dem Schritt:
Kontrahieren des wenigstens einen Expansionselements (8) zum Lösen des Formschlusses und/oder des Kraftschlusses.

8. Anordnung oder Verfahren nach einem der vorhergehenden Ansprüche, wobei die wenigstens eine Einbuchtung (6) an einer Unterseite der Transporteinrichtung (2) vorgesehen ist.

9. Anordnung oder Verfahren nach einem der vorhergehenden Ansprüche, wobei an der Transporteinrichtung (1) eine Mehrzahl voneinander beabstandete Einbuchtungen (6) vorgesehen sind und der Fangarm (1) an seinem der Bodenstation (15) abgewandeten Ende (3) eine Mehrzahl voneinander beabstandete Expansionselemente (8) aufweist.

10. Anordnung oder Verfahren nach einem der vorhergehenden Ansprüche, wobei die wenigstens eine Einbuchtung (6) als Hülse und/oder das wenigstens eine Expansionselement (8) als Dorn ausgeführt ist.

11. Anordnung oder Verfahren nach einem der vorhergehenden Ansprüche, wobei die wenigstens eine Einbuchtung (6) eine trichterartige Öffnung (7) zum Einführen des wenigstens einen Expansionselementes (8) aufweist.

12. Anordnung oder Verfahren nach einem der vorhergehenden Ansprüche, wobei sich die wenigstens eine Einbuchtung (6) im Profil von einer der Transporteinrichtung (2) abgewandten Öffnung (7) hin zu der Transporteinrichtung (2) schlüssellochartig und/oder hohlraumartig erweitert.

13. Anordnung oder Verfahren nach dem vorhergehenden Anspruch, wobei in der schlüssellochartigen und/oder hohlraumartigen Erweiterung wenigstens ein Luftauslass (13) vorgesehen ist.

14. Anordnung oder Verfahren nach einem der vorhergehenden Ansprüche, wobei der Fangarm (1) höhen-, horizontal veränderbaren und/oder verdrehbar ausgeführt ist und/oder wenigstens ein drehbares Gelenk (4) aufweist.

15. Anordnung oder Verfahren nach einem der vorhergehenden Ansprüche, wobei die Bodenstation (15) als Fachanlagenvorrichtung, Aufnahmebehälter, Fahrzeug, Gebäude und/oder Mast

## Claims

1. Arrangement comprising a flight-capable unmanned transport device (2) and a movable catch arm (1) provided at a ground station (15) for holding the transport device (2) at the ground station (15),
wherein at least one indentation (6) is provided at the transport device (2), and
the catch arm (1) comprises at its end (3) facing away from the ground station (15) at least one expansion element (8) made of a rubber-like material, which can be inserted into the at least one indentation (6) and, in the inserted state, is configured to be inflated by compressed air to produce a form fit and/or a force fit between the at least one indentation (6) and the at least one expansion element (8).

2. Arrangement according to the preceding claim, wherein the catch arm (1) comprises at its end facing away from the ground station (5) a plurality of expansion elements (8) which can be variably arranged at the end (3) at a distance from one another.

3. Method for holding a flight-capable unmanned transport device (2) at a ground station (15) comprising a movable catch arm (1) provided at the ground station (15), wherein
at least one indentation (6) is provided at the transport device (2), and
the catch arm (1) comprises at its end (3) facing away from the ground station (15) at least one expansion element (8) made of a rubber-like material,
including the steps:
inserting the at least one expansion element (8) into the at least one indentation (6), and
inflating the at least one expansion element (8) in the inserted state by means of compressed air to produce a form fit and/or a force fit between the at least one indentation (6) and the at least one expansion element (8).

4. Method according to the preceding method claim, wherein the catch arm (1) comprises a plurality of expansion elements (8) at its end (3) facing away from the ground station (15); and
including the step:
arranging the plurality of expansion elements (8) at the end (3) corresponding to a plurality of indentations (6).

5. Method according to any one of the preceding method claims, comprising the steps:
aligning the at least one expansion element (8) relative to the at least one indentation (6) during a flight and/or landing of the transport device (2); and/or
aligning the transport device (2) relative to the ground station (15) by means of the catch arm (1) after establishing the form fit and/or the force fit.

6. Method according to any one of the preceding method claims, comprising the steps:
detecting a wind speed and/or direction at the ground station (15); and
aligning the at least one expansion element (8) relative to the at least one indentation (6) depending on the detected wind speed and/or direction.

7. Method according to any one of the preceding method claims, wherein the step of expanding comprises inflating the at least one expansion element (8); and/or comprising the step of contracting the at least one expansion element (8) in order to release the form fit and/or the force fit.

8. Arrangement or method according to any one of the preceding claims, wherein the at least one indentation (6) is provided at a bottom side of the transport device (2).

9. Arrangement or method according to any one of the preceding claims, wherein a plurality of indentations (6) spaced apart from one another are provided at the transport device (2) and the catch arm (1) comprises a plurality of expansion elements (8) spaced apart from one another at its end (3) facing away from the ground station (15).

10. Arrangement or method according to any one of the preceding claims, wherein the at least one indentation (6) is configured as a sleeve and/or the at least one expansion element (8) is configured as a mandrel.

11. Arrangement or method according to any one of the preceding claims, wherein the at least one indentation (6) comprises a funnel-like opening (7) for inserting the at least one expansion element (8).

12. Arrangement or method according to any one of the preceding claims, wherein the at least one indentation (6) in the profile widens in a keyhole-like and/or cavity-like manner from an opening (7) facing away from the transport device (2) towards the transport device (2).

13. Arrangement or method according to the preceding claim, wherein in the keyhole-like and/or cavity-like extension at least one air outlet (13) is provided.

14. Arrangement or method according to any one of the preceding claims, wherein the catch arm (1) is configured to be vertically, horizontally variable and/or rotatable and/or comprises at least one rotatable hinge (4).

15. Arrangement or method according to any one of the preceding claims, wherein the ground station (15) is configured as a compartment system device, receiving container, vehicle, building and/or mast.

## Revendications

1. Ensemble avec un dispositif de transport (2) sans pilote en état de navigabilité et d'un bras d'accrochage (1) mobile prévu sur une station au sol (15) pour le maintien du dispositif de transport (2) sur la station au sol (15), dans lequel
au moins un renfoncement (6) est prévu sur le dispositif de transport (2), et
le bras d'accrochage (1) présente à son extrémité (3) opposée à la station au sol (15) au moins un élément d'expansion (8) à base d'un matériau de type caoutchouc, lequel peut être inséré dans l'au moins un renfoncement (6) et est conçu, dans l'état inséré permettant d'établir une obturation par complémentarité des formes, et/ou une obturation par complémentarité des forces, en pouvant être gonflé par de l'air comprimé entre l'au moins un renfoncement (6) et l'au moins un élément d'expansion (8).

2. Ensemble selon la revendication précédentes, dans lequel le bras d'accrochage (1) présente une multiplicité d'éléments d'expansion (8) à son extrémité opposée à la station au sol (5), lesquels peut être rangés à l'extrémité (3) de manière variable au niveau de leur écart les uns par rapport aux autres.

3. Procédé de maintien d'un dispositif de transport (2) sans pilote en état de navigabilité à une station au sol (15) avec un bras d'accrochage (1) mobile prévu sur la station au sol (15), dans lequel
au moins un renfoncement (6) est prévu sur le dispositif de transport (2), et
le bras d'accrochage (1) présente à son extrémité (3) opposée à la station au sol (15) au moins un élément d'expansion (8) à base d'un matériau de type caoutchouc, avec les étapes :
d'insertion de l'au moins un élément d'expansion (8) dans l'au moins un renfoncement (6), et
de gonflage de l'au moins un élément d'expansion (8) dans l'état inséré ay moyen d'air comprimé pour l'établissement d'une obturation par complémentarité des formes et/ou d'une obturation par complémentarité des forces entre l'au moins un renfoncement (6) et l'au moins un élément d'expansion (8).

4. Procédé selon la revendication de procédé précédente, dans lequel le bras d'accrochage (1) présente à son extrémité (3) opposée à la station au sol (15) une multiplicité d'éléments d'expansion (8), et avec l'étape :
de disposition de la multiplicité des éléments d'expansion (8) à l'extrémité (3) correspondant à une multiplicité de renfoncements (6).

5. Procédé selon l'une des revendications de procédé précédentes, avec l'étape :
d'orientation de l'au moins un élément d'expansion (8) pendant un vol et/ou un atterrissage du dispositif de transport (1) par rapport à l'au moins un renfoncement (6), et/ou
après l'établissement de l'obturation par complémentarité des formes et/ou de l'obturation par complémentarité des forces, l'orientation du dispositif de transport (1) par rapport à la station au sol (15) par le bras d'accrochage (1).

6. Procédé selon l'une des revendications de procédé précédentes, avec l'étape :
de détection d'une vitesse du vent et/ou d'une direction du vent à la station au sol (15), et
d'orientation de l'au moins un élément d'expansion (8) par rapport à l'au moins un renfoncement (6) en fonction de la vitesse du vent et/ou de la direction du vent détectées.

7. Procédé selon l'une des revendications de procédé précédentes, dans lequel l'étape d'expansion comprend un remplissage d'air de l'au moins un élément d'expansion (8), et/ou avec l'étape :
de contraction de l'au moins un élément d'expansion (8) pour la libération de l'obturation par complémentarité des formes et/ou l'obturation par complémentarité des forces.

8. Ensemble ou procédé selon l'une des revendications précédentes, dans lequel l'au moins un renfoncement (6) est prévu sur une face inférieure du dispositif de transport (2).

9. Ensemble ou procédé selon l'une des revendications précédentes, dans lequel une multiplicité de renfoncements (6) espacés les uns des autres est prévue sur le dispositif de transport (1), et le bras d'accrochage (1) présente à son extrémité (3) opposée à la station au sol (15) au moins une multiplicité d'éléments d'expansion (8) espacés les uns des autres.

10. Ensemble ou procédé selon l'une des revendications précédentes, dans lequel l'au moins un renfoncement (6) est conçue en tant que manchon et/ou l'au moins un élément d'expansion (8) est conçu en tant que goujon.

11. Ensemble ou procédé selon l'une des revendications précédentes, dans lequel l'au moins un renfoncement (6) présente un orifice (7) de type entonnoir permettant d'insérer l'au moins un élément d'expansion (8).

12. Ensemble ou procédé selon l'une des revendications précédentes, dans lequel l'au moins un renfoncement (6) s'élargit avec un profil comme un trou de serrure, et/ou comme un espace creux, à partir d'un orifice (7) opposé au dispositif de transport (2) jusqu'au dispositif de transport (2).

13. Ensemble ou procédé selon l'une des revendications précédentes, dans lequel au moins une sortie d'air (13) est prévue dans l'élargissement de type trou de serrure et/ou de type espace creux.

14. Ensemble ou procédé selon l'une des revendications précédentes, dans lequel le bras d'accrochage (1) est conçu modifiable en hauteur, horizontalement et/ou rotatif, et/ou présente au moins une articulation (4) rotative.

15. Ensemble ou procédé selon l'une des revendications précédentes, dans lequel la station au sol (15) [est conçue] comme un dispositif à système compartimenté, un réceptacle, un véhicule, un bâtiment et/ou un mât.
